Europäisches Patentamt

European Patent Office

Office européen des brevets

(19)

(11)     EP 1 091 203 B1

(12)     EUROPÄISCHE PATENTSCHRIFT

(45) Veröffentlichungstag und Bekanntmachung des
Hinweises auf die Patenterteilung:
**28.09.2005   Patentblatt 2005/39**

(51) Int Cl.[7]: **G01N 15/02**, A24C 5/34

(21) Anmeldenummer: **00117364.0**

(22) Anmeldetag: **23.08.2000**

(54) **Verfahren und Vorrichtung zur Erfassung der Partikel eines Tabakpartikel-Stroms**

Process and device for measuring particles of a tobacco particle stream

Procédé et dispositif de mesure des particules d'un flux de particules de tabac

(84) Benannte Vertragsstaaten:
**AT BE CH CY DE DK ES FI FR GB GR IE IT LI LU
MC NL PT SE**

(30) Priorität: **08.10.1999   DE 19948559**

(43) Veröffentlichungstag der Anmeldung:
**11.04.2001   Patentblatt 2001/15**

(73) Patentinhaber: **British-American Tobacco
(Germany) GmbH
D-20354 Hamburg (DE)**

(72) Erfinder:
• **Ulrich, Reinhard, Prof. Dr.
21244 Buchholz (DE)**

• **Weiss, Arno, Dr.
22848 Norderstedt (DE)**
• **Schmekel, Gerald
25337 Elmshorn (DE)**
• **Masurat, Heinz-Werner
95339 Neumarkt (DE)**
• **Ehling, Uwe Werner
95497 Goldkronach (DE)**

(74) Vertreter: **Schwabe - Sandmair - Marx
Stuntzstrasse 16
81677 München (DE)**

(56) Entgegenhaltungen:
**EP-A- 0 157 977          US-A- 4 513 755
US-A- 4 835 605          US-A- 4 903 374**

**Beschreibung**

Die Erfindung betrifft ein Verfahren und eine Vorrichtung zur Erfassung der Partikel eines Tabakpartikel-Stroms bei der Herstellung von rauchbaren Artikeln, insbesondere von Winnowings.

Bei der Cigarettenherstellung erfolgt in der Cigarettenmaschine eine Sichtung des ankommenden Tabakstroms. Nur hinreichend feines Material wird in den Strang eingebaut. Der verbleibende Anteil gröberen Materials, die sogenannten "Winnowings", wird durch den Sichtprozess abgeschieden und per Luftförderung für die weitere Verarbeitung zentral gesammelt.

Für die Betriebsoptimierung der Cigarettenmaschine ist es wichtig, den Massenstrom von Winnowings an und im Betrieb der Cigarettenherstellungsmaschine sowie die Größenverteilung der Winnowings online zu bestimmen und die gewonnenen Parameter zur Justierung der Ausselektion der Winnowings zu nutzen. Bisher wurde die Erfassung der Winnowings nicht an der Cigarettenmaschine durchgeführt, sondern, wenn überhaupt, offline durch Siebanalysen der ausgeschiedenen Winnowings. Das resultierende Messergebnis kann dann dazu dienen, die Sichtungsbedingungen online im Hinblick auf möglichst hohe Produktqualität (Ausschleusung möglichst aller Winnowings) bei Abscheidung von ausschließlich Winnowings zu optimieren. Eine raschere und flexiblere Optimierung wäre gegeben, wenn die Analyse des Winnowing-Massenstromes online möglich wäre unmittelbar am Winnowing-Ausgang der Cigarettenmaschine. Diese Messung des Massenstroms muss bei variabler Geschwindigkeit des Förderluftstroms erfolgen, damit die Funktion auch bei sich ändernden Betriebsparametern der Cigarettenmaschine gewährleistet ist, und die Genauigkeit des Messergebnisses sollte unabhängig von Schwankungen der Winnowings-Partikelgrößen sein.

Darüber hinaus ist es im Sinne der laufenden Prozessüberwachung interessant, aus dem Winnowings-Teilchenstrom Informationen über die momentane Größenverteilung zu erhalten, etwa über die mittlere Partikelgröße und die Streubreite der Größenverteilung, um Störungen des Sichtungsprozesses schnell und selektiv erkennen zu können.

Dies ist mit den bisher eingesetzten offline Siebanalysen per definitionem nicht möglich.

Auf anderen technischen Gebieten außerhalb der Cigarettenherstellung sind bereits verschiedene optische Sichtungsverfahren entwickelt worden. So zeigt die DE-41 19 240 C2 ein Verfahren zur Bestimmung der Partikelgrößenverteilung eines Partikelgemisches bei dem die einzelnen Partikel Kugelform haben. Dabei wird das Partikelgemisch an einer optoelektronischen Meßstrecke senkrecht zu einem parallelen Lichtstrahl vorbeibewegt und zeilenweise optoelektronisch abgetastet, wodurch die Sehnenlängen der Partikel gemessen und mit einem Klassifikator bestimmte Längenklassen zugeordnet werden; daraus wird die Partikelgrößenverteilung nach Partikelgrößenklassen berechnet, die nach den Partikeldurchmessern der entsprechenden Längenklassen festgelegt werden.

Aufgrund der von der Kugelform stark abweichenden Formen der Winnowings lässt sich dieses Verfahren nicht zur Sichtung von Tabakteilchen einsetzen.

Die DE 32 36 261 beschreibt ein Verfahren zum Ermitteln des durchschnittlichen Radius und/oder der durchschnittlichen Länge von in einem Strömungsmittel beförderten Teilchen, die durch zwei Schlitze einer Maske fliegen. Die Strahlung, die durch die Partikel emittiert, gestreut oder absorbiert wird, wenn sie diese Schlitze durchsetzen, wird überwacht, wodurch bestimmte Partikel identifiziert werden können, die vollständig durch beide Schlitze hindurchtreten. Auch dieses Verfahren ist aufgrund der unregelmäßigen Formen der Tabak-Winnowings nicht für die Sichtung von Tabakteilchen geeignet.

Aus der DE 197 06 890 A geht ein ähnliches Verfahren hervor, wobei diejenigen Partikel identifiziert werden, für welche die emittierte, gestreute oder absorbierte Strahlung eine vorbestimmte Beziehung hat; die Größe der identifizierten Partikel wird aus der Menge der emittierten, gestreuten oder absorbierten Strahlen ermittelt, wenn die identifizierten Partikel durch die Schlitze hindurchtreten.

Die DE 37 06 502 zeigt eine Vorrichtung zur Bestimmung der Kornverteilung bei pulverförmigem Gut mit zwei Messzellen, die wechselweise in den Strahlengang eines Laserstrahls eingeführt werden können. Auf diese Weise steht eine Messzelle für den Betrieb zur Verfügung, während gleichzeitig die zweite Messzelle gereinigt werden kann.

Die DE 42 15 908 A offenbart ein optisches Partikelmessverfahren für die Reinraumüberwachung und zur Kontrolle hochreiner Flüssigkeit, wobei die durch ein Messvolumen geleiteten Partikel bestrahlt werden und eine Abbildungseinrichtung mit Detektor das dabei entstehende Streulicht ermittelt; die Strahlung für das Messvolumen wird derart moduliert, dass sich ein zeitlich moduliertes Messsignal ergibt, wodurch eine Verbesserung des Verhältnisses Signal/Rauschen möglich wird.

Die DE 28 55 583 C2 zeigt ein Verfahren zur Bestimmung der Korngrößenverteilung von Korngemischen, die mittels einer Fernsehkamera statisch registriert und die Daten in Abhängigkeit von den statisch projizierten Bilder der fallenden Körner verarbeitet werden. Dabei werden Eichmessungen an einer herausgesiebten Kornklasse aus dem Korngemisch durchgeführt und unter der Annahme, dass die Körner die Gestalt eines Rotationsellipsoids haben, ein mittlerer Konfigurationskoeffizient als mittlerer Wert des Verhältnisses der langen Achse zur kurzen Achse der Körner ermittelt. Auch diese Annahme einer rotationsellipsoiden Form lässt sich bei Tabakteilchen nicht einsetzen.

Die DE 32 16 486 zeigt einen Detektor für den abgeschnittenen Tabaküberschuss bei der Cigarettenherstellung. Der gesamte Tabaküberschuss wird pneumatisch durch den Detektor geführt, dessen Lichtstrahl durch den Tabakstrom ähnlich wie ein Schirm gedämpft wird. Die Stärke des durch die Fotozellen des Detektors erzeugten Stroms ist also umgekehrt proportional zur Dichte des Tabakstroms und damit zum Durchsatz des Tabaks. Die Erfassung einzelner Tabakteilchen ist nicht möglich.

Schließlich zeigt die DE 43 07 407 C2 noch eine Vorrichtung zur Herstellung von Cigaretten, bei der die leichten Tabakpartikel von dem Abfallmaterial mit den schwereren Tabakpartikeln getrennt werden. Eine Überwachung der Qualität der Trennung mittels eines geeigneten Sensors wird nicht angesprochen.

Der Erfindung liegt die Aufgabe zugrunde, ein Verfahren und eine Vorrichtung zur Erfassung des Massenstromes der Partikel eines Winnowings-Stroms bei der Herstellung von rauchbaren Artikeln zu schaffen, bei dem die Nachteile der nachträglichen Siebanalysen vermieden werden. Insbesondere soll ein Verfahren vorgeschlagen werden, das online arbeitet und damit zur Optimierung der Sichtungsbedingungen im Hinblick auf Produktqualität und die Abscheidung von ausschließlich Winnowings eingesetzt werden kann.

Diese Aufgabe wird erfindungsgemäß durch die in den Ansprüchen 1 bzw. 22 angegebenen Merkmale gelöst.

Zweckmäßige Ausführungsformen werden durch die Merkmale der Unteransprüche definiert.

Die mit der Erfindung erzielten Vorteile beruhen auf einem optischen Verfahren, das mittels einer Feinstrahl-Lichtschranke arbeitet und aus der Abdunklung des Lichtstrahls der Feinstrahl-Lichtschranke eine mittlere Abmessung und ein mittleres Volumen der Winnowings-Partikel aufgrund von statistischen Überlegungen ermittelt.

Diese Messung liefert primär Information über die Partikelgrößen-Verteilung, weil die einzelnen Partikel separat vermessen werden. Daraus werden fortlaufend die mittlere Abmessung, das mittlere Volumen, die mittlere Partikelmasse und der Partikelmassenstrom bestimmt.

Der so ermittelte Messwert für den Massenstrom ist unabhängig von der Fördergeschwindigkeit des Winnowings-Stroms, da die Partikelgeschwindigkeit, beispielsweise durch Verwendung einer zweiten Feinstrahl-Lichtschranke, unmittelbar im Gerät gemessen und bei der Berechnung der eben genannten Größen verwendet wird. Auf diese Weise wird auch der Schlupf der Partikel in der Strömung mit berücksichtigt, und das Messgerät wird autark, unabhängig von anderen Sensoren.

Die Messung kann ohne aufwendige Konstruktionen für die Zu- und Abführung des Winnowings-Stroms erfolgen, indem der aus der Cigarettenmaschine abgezogene Winnowings-Strom durch ein Förder-/Sensor-Rohr gefördert wird, an dem die bzw. jede Feinstrahl-Lichtschranke angeordnet ist. Die erforderliche Bauhöhe liegt unterhalb von 100 mm, so dass überall Platz zum Einbau dieses Sensors zur Verfügung stehen sollte.

Das optische Messverfahren führt zu keiner zusätzlich Degradation des Winnowings-Stroms, da der Sensor berührungsfrei arbeitet und stoßfrei ohne Querschnittsänderung direkt in ein vorhandenes Förderrohr eingefügt werden kann, das direkt als Sensor-Rohr dienen kann.

Der relativ einfache Aufbau des mechanisch/physikalischen Teils des Sensors gewährleistet eine hohe Zuverlässigkeit, verbunden mit einem vergleichsweise günstigen Preis, insbesondere bei hohen Stückzahlen.

Die Erfindung wird im folgenden anhand von Ausführungsbeispielen unter Bezugnahme auf die beiliegenden, schematischen Zeichnungen näher erläutert. Dabei zeigen:

Fig. 1     eine Probe von Winnowings,

Fig. 2a    einen Sensor-Querschnitt mit Winnowings-Partikeln,

Fig. 2b    den Detektionsbereich eines Winnowings-Partikels mit gegebener Orientierung,

Fig. 2c    die Ansprechwahrscheinlichkeit für ein Winnowings-Partikel mit beliebiger Orientierung,

Fig. 3     den schematischen Aufbau der Massenstrom-Messung mit zwei Feinstrahl-Lichtschranken im Winnowing-Partikelstrom,

Fig. 4     den zeitlichen Verlauf der Ausgangssignale der beiden Feinstrahl-Lichtschranken,

Fig. 5     den detaillierten Aufbau eines Winnowings-Massenstrom-Sensors mit zwei Feinstrahl-Lichtschranken, und

Fig. 6     ein Diagramm Größe/Geschwindigkeit mit zwei Partikelklassen.

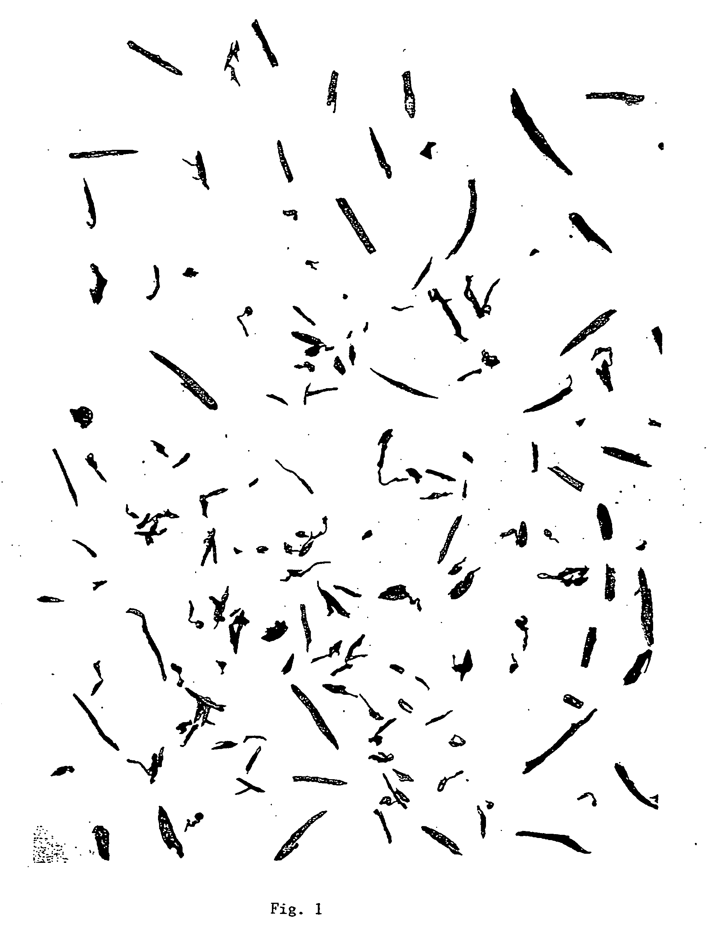

Fig. 1 zeigt eine Probe von Winnowings, die direkt durch Aufstreuen auf die Abtastfläche eines Kopiergerätes abgebildet wurde. Die einzelnen Winnowings-Partikel sind zumeist langgestreckt mit Quermessungen hauptsächlich im Bereich von 0,5 bis 2 mm und Längenabmessungen im Bereich von 5 mm bis 20 mm.

Für die folgenden Abschätzungen wird daher mit einer über Längs- und Querdimension gemittelten Winnowings-Partikelabmessung von a = 2 mm gerechnet werden. Diese vereinfachende Vorgehensweise wird später noch eingehend diskutiert.

Wie oben bereits erwähnt wurde, erfolgt bei der Cigarettenherstellung in der Cigarettenmaschine eine Sichtung des ankommenden Tabakstroms. Nur hinreichend feines Tabakmaterial wird in den Tabakstrang eingebaut, während der verbleibende Anteil an gröberem Material die Winnowings darstellt und an einem Ausgang der Cigarettenmaschine abgegeben und per Luftförderung für die weitere Verarbeitung zentral gesammelt wird.

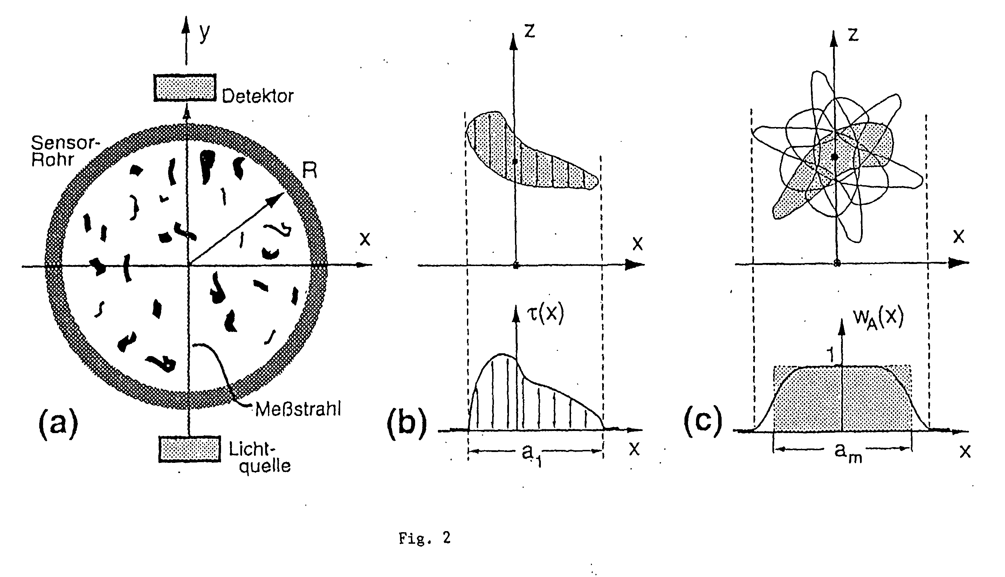

Auf diesem Weg werden die Winnowings durch das in Figur 2a dargestellte Förderrohr transportiert, das gleichzeitig auch als Sensor-Rohr dient. An diesem Sensor-Rohr ist eine Feinstrahl-Lichtschranke angeordnet, die auf einer Seite des Sensor-Rohrs eine Lichtquelle und auf der gegenüberliegenden Seite des Sensors-Rohrs einen Detektor aufweist. Der Messstrahl verläuft zentrisch durch den Rohrquerschnitt. Die Richtung des Messtrahles wird im folgenden als y-Richtung eines kartesischen Koordinatensystems benutzt.

Der Radius R des Rohres ist im Vergleich mit den Abmessungen der Winnowings-Partikel sehr groß.

Die Achse des Sensor-Rohrs wird als die z-Achse des Koordinatensystems benutzt. Die x-Achse des Koordinatensystems hat dann die in Fig. 2a angegebene Richtung.

Die Winnowings-Partikel unterscheiden sich in ihren Flugbahnen (Schwerpunkts-Koordinaten $\{x_i, y_i\}$ im Sensor) sowie in ihren Formen, Größen und Winkelorientierungen. Bei ungestörten Strömungsverhältnissen darf angenommen werden, dass die Flugbahnen der Winnowings-Partikel im statistischen Mittel gleichmäßig über den Rohrquerschnitt verteilt sind.

Die Querabmessungen des Lichtstrahls werden so klein gewählt, wie es technisch möglich ist. Sie dürften dann als vernachlässigbar klein vorausgesetzt werden im Vergleich zu allen Abmessungen der Winnowings-Partikel, so dass hier der Begriff "Feinstrahl-Lichtschranke" verwendet werden kann.

In der Praxis hat der Messlichtstrahl beispielsweise einen Durchmesser $D_S$ von 0,1 mm. Die zugehörigen Detektoren werden so ausgelegt, dass sie hinreichend schnell ansprechen (beispielsweise im Bereich von 100 ns), um die Abmessungen der Partikel bei der Partikelgeschwindigkeit (typisch 25 m/s) genau zu bestimmen.

Bei der Erfassung der Winnowings-Partikel mittels der Feinstrahl-Lichtschranke fliegt die Mehrzahl der geforderten Winnowings-Partikel an der Lichtschranke vorbei, und nur ein kleiner Teil wird tatsächlich erfasst. Da die Abmessungen der Winnowings-Partikel sehr viel größer sind als der Strahldurchmesser $D_S$, erhält man bei bekannter Fördergeschwindigkeit v von jedem Partikel, das die Feinstrahl-Lichtschranke passiert, eine kurzzeitige Unterbrechung des Lichtstrahles. Bei gegebener Geschwindigkeit der Partikel ist die Dauer $\tau_i$ der Unterbrechung proportional zu dem auf die Flugbahn "projizierten" Durchmesser $s_i$ des Partikels. Diese Pulsdauer wird, zusammen mit der gemessenen Geschwindigkeit $v_i$ des Partikels, benutzt, um seinen Durchmesser $s_i$ zu berechnen und daraus dann sein Volumen und seine Masse. Aus den Massen mi, die für eine hinreichende Anzahl von Partikeln während einer Messzeit $T_o$ erfasst wurden, folgt schließlich der gesamte Massenstrom.

Weil die Chance eines Partikels, von der Feinstrahl-Lichtschranke erfasst zu werden, mit seiner Größe zunimmt, muss bei dieser Berechnung des Massenstromes aus den Lichtschrankensignalen die Detektionswahrscheinlichkeit der Winnowings-Partikel mit berücksichtigt werden. Dies wird im folgenden anhand von Fig. 2b und 2c erläutert.

Die Abbildung 2b zeigt ein Winnowings-Partikel, das sich entlang der z-Richtung durch den Sensor bewegt und die Feinstrahl-Lichtschranke auslöst. Die Zeitdauer der erzeugten Unterbrechung hängt von der x-Position der Flugbahn ab, also $\tau_i = \tau(x)$, außerdem von der Winkel-Orientierung des Winnowings-Partikels.

Der in Fig. 2b gezeigte Verlauf der Funktion $\tau(x)$ gilt nur für die gezeigte Orientierung. Die Breite $a_1$ des Bereiches, in dem $\tau \neq 0$ ist, ist der Detektionsbereich des Winnowings-Partikels bei der angegebenen Orientierung.

Wird nun dasselbe Winnowings-Partikel in beliebiger Orientierung betrachtet, so tritt an die Stelle des Detektionsbereichs eine ortsabhängige Ansprechwahrscheinlichkeit $w_A(x)$ der Lichtschranke, die in Fig. 2c dargestellt ist. Sie wird durch Mittelung über alle Orientierungen erhalten.

Für sehr kleine Werte von $|x|$, also wenn die Flugbahn sehr nahe an der y-Achse und damit sehr nahe an dem Lichtstrahl vorbeiführt, spricht die Schranke mit Sicherheit an, dort ist

$$w_A(x) = 1.$$

Bei größeren Abständen $|x|$ geht die Ansprechwahrscheinlichkeit kontinuierlich gegen 0. Es wird deshalb eine mittlere Ansprechbreite $a_m$ definiert entsprechend der Gleichung

$$a_m = \int w_A(x)\, dx$$

In der Darstellung gemäß Fig. 2c bedeutet dies die Breite eines Rechtecks, das flächengleich mit der Fläche unter der Kurve $w_A(x)$ ist. Der genaue Wert dieser Breite hängt von der Form und der Größe des Partikels ab, nicht jedoch von seiner Winkelorientierung, denn hierüber ist gemittelt worden.

Diese Größe $a_m$ erlaubt es, die Wahrscheinlichkeit anzugeben, mit der das Winnowings-Partikel von der Lichtschranke gezählt wird, wenn seine Bahn an einer beliebigen Stelle durch den Querschnitt des Sensorrohrs verläuft. Diese Zählwahrscheinlichkeit $w_z$ beträgt

$$w_z = A_{Pi} / A_Q = a_m \cdot 2R / \pi R^2 = (2/\pi) \cdot a_m/R$$

Dabei ist $A_{Pi}$ die Fläche des Streifens der Breite $a_m$ und der Länge 2R, in dem das Winnowings-Partikel erfasst wird, während $A_Q = \pi R^2$ den Rohrquerschnitt angibt.

Für ein einzelnes Partikel ist die Ansprechbreite $a_m$ proportional zur Partikelgröße. Wird nun vorausgesetzt, dass das Formenspektrum der Partikel stets gleich bleibt, so gilt dieselbe Proportionalität auch für die Mittelwerte, und es kann eine mittlere Ansprechbreite $a_m$ angesetzt werden gemäß der Gleichung

$$a_m = f_\alpha \; \alpha$$

mit der mittleren Partikelgröße $\alpha$ und einem Formfaktor $f_\alpha$, der empirisch (bei der Kalibrierung des Sensors) bestimmt werden kann. Dementsprechend lässt sich mit der Zählwahrscheinlichkeit $w_z$ die mittlere Zählrate Z ausdrücken als

$$Z = Nw_z = (2f_\alpha/\pi) \; N \; \alpha/R$$

wenn N die Anzahl der pro Zeiteinheit durch den Rohrquerschnitt strömenden Partikel ist.

Mittels dieser Beziehung kann aus der gemessenen Zählrate Z das Produkt N$\alpha$ bestimmt und zur Berechnung des Massenstroms $\mu$ verwendet werden. Dieser ergibt sich als

$$\mu = Nm_P$$

wenn $m = f_m \alpha^3$ die mittlere Masse eines Partikels bezeichnet. Sie ist proportional zur 3. Potenz der Partikelgröße $\alpha$. Der hier maßgebliche Proportionalitätsfaktor $f_m$ muss empirisch bestimmt werden. Durch Zusammenfassung vorstehender Beziehungen erhält man den Massenstrom in der Form

$$\mu = \frac{\pi}{2} \; R \; \frac{f_m}{f_\alpha} \; Z\alpha^2$$

Zur weiteren Auswertung dieses Ausdruckes muss noch die Größe $\alpha^2$ gefunden werden. Sie folgt aus der mittleren Dauer der Lichtschrankensignale, wie im folgenden gezeigt wird.

Es war bereits erläutert worden, dass die Zeitdauer $\tau_i$ eines einzelnen Lichtschrankensignales abhängt von der genauen Durchstoßposition $x_i$ der Bahn des detektierten Partikels durch die Sensor-Ebene sowie von der Größe und Winkelorientierung des Partikels.

Da der Lichtschrankenstrahl vernachlässigbar dünn ist im Vergleich zu den Winnowings-Partikelabmessungen, und da das Formenspektrum als konstant vorausgesetzt war, mitteln sich die Abhängigkeiten der Pulsdauer $\tau_i$ von der Position $x_i$ und von der Winkelorientierung für alle Partikel in gleicher Weise heraus, und es bleibt für alle Partikel dieselbe Proportionalität der Pulsdauer zur Größe der Partikel. Folglich muss auch die mittlere Pulsdauer $\tau$ proportional sein zur mittleren Partikelgröße $\alpha$ und umgekehrt proportional zur Bewegungsgeschwindigkeit v der Partikel.

$$\tau = f_t \; \alpha / v$$

mit einem Formfaktor $f_t$, der für das vorliegende Formenspektrum charakteristisch ist. Damit erhält man schließlich durch Zusammenfassung der oben hergeleiteten Teilergebnisse die Auswerteformel für den Massenstrom $\mu$

$$\mu_1 = \Gamma_1 \; Z \; v^2 \; \tau^2$$

Hier sind alle Formfaktoren und andere Konstanten des Sensors in einem einzigen Faktor $\Gamma_1$ zusammengefasst worden. Wegen der zahlreichen Annahmen, die in diesen Formfaktoren stecken, erscheint eine Berechnung dieses Faktors $\Gamma_1$ jedoch nicht zweckmäßig. Statt dessen wird $\Gamma_1$ durch eine Kalibrierung des Sensors ermittelt.

Die Bestimmung der mittleren Pulsdauer $\tau$ kann technisch einfach dadurch erfolgen, dass die zeitlichen Dauern $\tau_i$ aller Pulse während einer Messzeit $T_O$ addiert werden und die Summe anschließend auf $T_O$ bezogen wird. Dazu genügt es im einfachsten Fall, die Pulse einer schnellen Quarzuhr jeweils während der Unterbrechungszeit $\tau_i$ der Lichtschranke auf einen summierenden Zähler zu leiten.

Um Information über die Partikelgrößenverteilung zu erhalten, ist es notwendig, die Zeitdauer $\tau_i$ jedes Pulses einzeln abzuspeichern. Wenn dann nach Ablauf der Messzeit $T_O$ diese Werte für $10^3$ ... $10^4$ Partikel bekannt sind, kann der Rechner die gemessene Verteilung von $\tau_i$-Werten graphisch auf dem Monitor darstellen. Zusätzlich kann der Rechner den Mittelwert $\tau$ und die Streubreite $\Delta\tau$ der Verteilung anzeigen oder per Datenbus einer übergeordneten Prozesssteuerung mitteilen.

Alternativ zu der beschriebenen Auswertung bietet sich übrigens eine andere Auswertemethode für den Massenstrom $\mu$ an. Dieser kann auch berechnet werden aus den Massen $m_i$ bzw. Volumina $V_i$ aller Partikel, die während einer gewissen Meßzeit $T_O$ durch den gesamten Sensorquerschnitt fliegen:

$$\mu = (1/T_O) \; \Sigma m_i = (\rho/T_O) \; \Sigma \; V_i = (\rho \; f_v / T_O) \; \Sigma \; a_i^3$$

mit einem Formfaktor $f_v = V_i/a_i^3$ und mit $\rho$ als Massendichte des Winnowing-Materials. Da nicht alle Partikel erfasst werden können, wird diese Summierung nur mit den von der Lichtschranke detektierten Partikeln vorgenommen. Dazu wird die größenabhängige Detektionswahrscheinlichkeit für jedes Partikel einzeln durch einen Gewichtsfaktor $g_i$ berücksichtigt, und man erhält

$$\mu = (\rho \; f_v / T_O) \; \Sigma \; g_i \; a_i^3$$

Wie oben ausgeführt, ist die Detektionswahrscheinlichkeit proportional zur Größe des Partikels. Es ist deshalb sinnvoll, die Gewichtung umgekehrt proportional zur Größe vorzunehmen, also

$$g_i = 1/a_i = v/\tau_i$$

Dies führt nach einigen Zwischenschritten auf die folgende alternative Auswertungsformel

$$\mu_2 = \Gamma_2 \, Z \, v^2 \, \tau_{eff}{}^2$$

in der $\tau_{eff}$ den quadratischen Mittelwert der Lichtschranken-Pulsdauern bedeutet und $\Gamma_2$ ein anderer empirisch zu bestimmender Kalibrierungsfaktor ist.

Obwohl die Gleichung für $\mu_1$ mit dem einfachen und die Gleichung für $\mu_2$ mit dem quadratischen Mittelwert arbeitet, besteht zwischen beiden Gleichungen kein Widerspruch. Da nämlich ein festes, konstantes Formenspektrum vorausgesetzt worden war, muss auch ein fester Zusammenhang zwischen den beiden genannten Mittelwerten bestehen. Dieser muss sich in entsprechend unterschiedlichen Kalibrierfaktoren $\Gamma_1/\Gamma_2$ auswirken. Bei Gültigkeit der genannten Voraussetzung bleibt es dann gleich, welche der beiden Gleichungen man zur Berechnung des Massenstromes verwendet.

In der Praxis wird die Voraussetzung des festen Formenspektrums allerdings nicht perfekt erfüllt sein. Dann bietet der Vergleich der beiden nach obigen Gleichungen ermittelten Massenstrom-Werte die Möglichkeit, auftretende Abweichungen online festzustellen. Wird zu einem Zeitpunkt plötzlich ein Unterschied zwischen den berechneten Massenstromwerten $\mu_1$ und $\mu_2$ beobachtet, so kann evtl. eine Auswertung der Pulsdauer-Statistik $\tau_i$ Auskunft darüber geben, wo die Ursache der Abweichung zu suchen ist, und welcher der beiden Massenstromwerte dann eine höhere Signifikanz besitzt.

Aus den obigen Überlegungen ergibt sich also, dass sich aus den Pulsdauern der Messsignale der Feinstrahl-Lichtschranke bzw. aus der mittleren Pulsdauer $\tau$ die mittleren Winnowings-Partikel-Abmessung $\alpha$ und andere wesentliche Parameter der Winnowings-Partikel-Verteilung ermitteln lassen.

Für die obigen Berechnungen war die Kenntnis der Bewegungsgeschwindigkeit v der Winnowings-Partikel erforderlich. Zu ihrer Messung stehen verschiedene Methoden zur Verfügung. Im einfachsten Fall dürfte die Geschwindigkeit der Förderluft im Sensorrohr ausreichen.

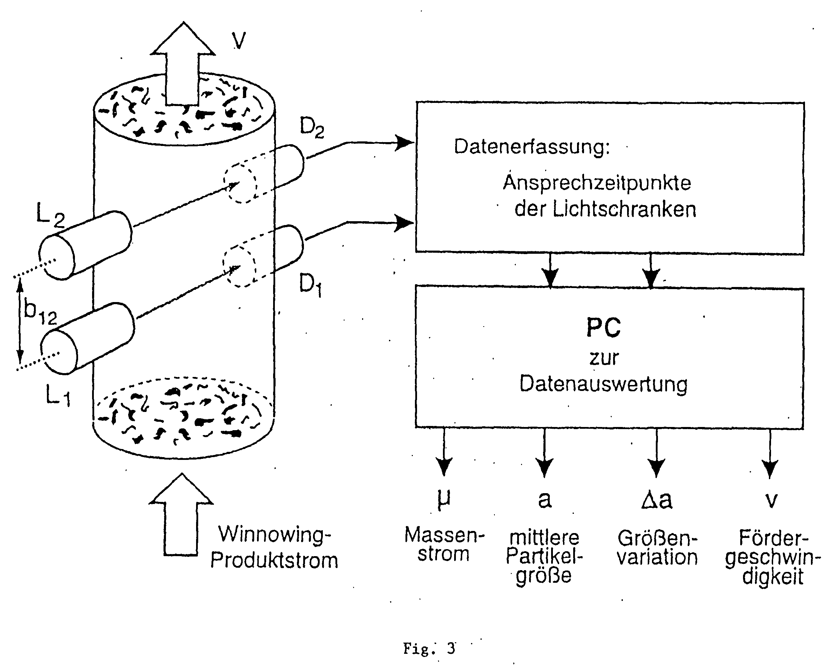

Nach einer bevorzugten Ausführungsform wird jedoch der Winnowings-Produktstrom mit Hilfe von zwei Feinstrahl-Lichtschranken abgetastet, die in einem kurzen Abstand $b_{12}$ hintereinander in dem Sensorrohr angebracht sind, siehe Fig. 3. Indem die Zeitdifferenz $t_{12} = v \cdot b12$ der Signale der 1. und der 2. Feinstrahl-Lichtschranke ausgewertet wird, ist es somit möglich, die Partikelgeschwindigkeit v direkt im Sensor selbst zu bestimmen. Damit wird der Partikelsensor autark, unabhängig von anderen Messgeräten.

Ein solches Messverfahren mit zwei Feinstrahl-Lichtschranken kann neben dem Massenstrom $\mu$, die Partikelgröße, die Größenvariation und die Fördergeschwindigkeit der Winnowings-Partikel liefern, wie man Fig. 3 entnehmen kann.

Die beiden Feinstrahl-Lichtschranken weisen jeweils Lichtquellen $L_1$ und $L_2$ sowie Detektoren $D_1$ und $D_2$ auf, die in dem Sensor-Rohr oder außerhalb desselben angeordnet sind. Bei einer Anordnung außerhalb des Sensor-Rohres müssen hinter den Lichtquellen bzw. vor den Detektoren transparente Fenster in die Wandung des Sensor-Rohrs eingebaut werden, um den Durchgang der Feinlichtstrahlen zu ermöglichen.

Zur Bestimmung des Massenstroms $\mu$ werden die Lichtschranken-Signale aller Winnowings-Partikel ausgewertet, die während einer voreingestellten Messzeit $T_0$ beobachtet werden. In der Praxis liegt ein typischer Wert dieser Messzeit bei $T_0 = 100$ s. Die in dieser Zeit $T_0$ von den Feinstrahl-Lichtschranken erfasste Teilchenzahl zwischen 1.000 und 10.000 Teilchen ist hinreichend groß, um daraus auf die Anzahl der insgesamt durch den Gesamtquerschnitt des Sensors geförderten Winnowings-Partikel mit einem Fehler in der Größenordnung von 3 % oder weniger schließen zu können. Durch Wahl einer längeren Messzeit oder Verwendung mehrerer Feinstrahl-Lichtschranken parallel nebeneinander ließe sich diese Genauigkeit noch weiter verbessern.

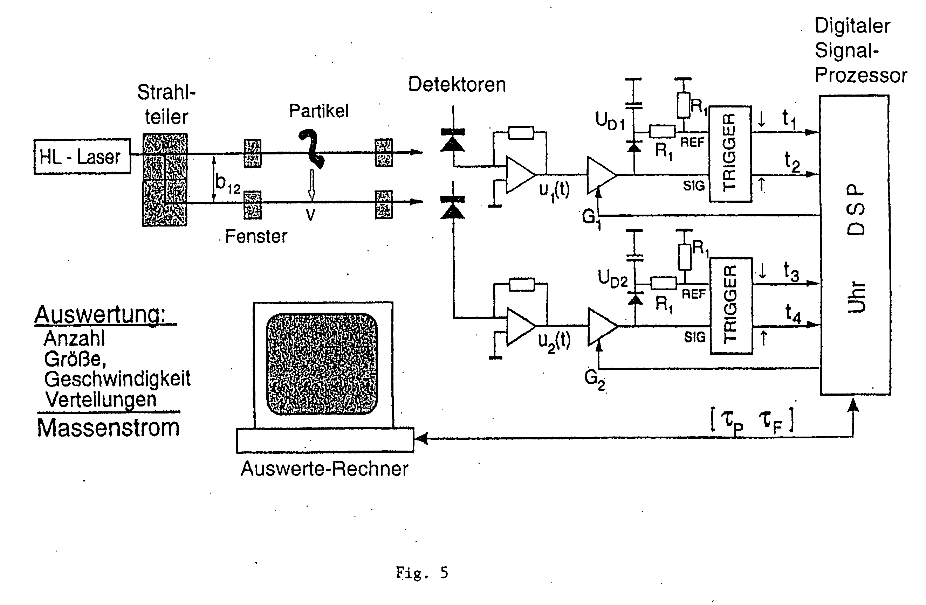

Die Detektor-Elektronik ist schematisch in Fig. 5 dargestellt.

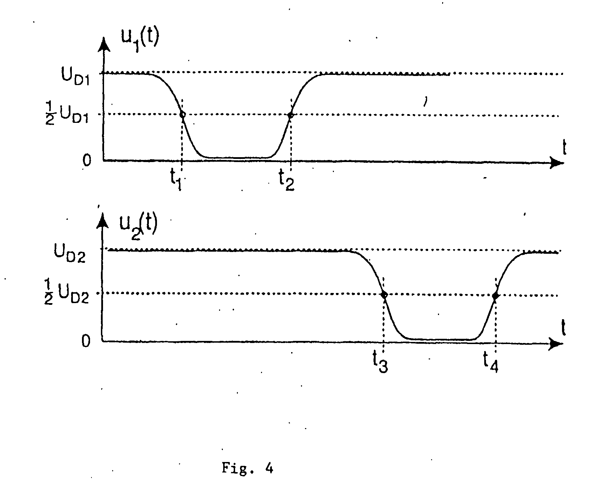

Das Konzept des Sensors sieht vor, dass der Lichtstrahl von den Partikeln vollständig unterbrochen wird. Infolge von Streulicht und Fremdlicht kann allerdings auch in den Dunkelzeiten noch ein kleines Signal vorhanden sein. Bei zweckmäßigem Aufbau der Lichtschranke (langer dünner schwarzer Tubus vor dem Detektor) kann dieses Restsignal so klein gemacht werden, dass ein Ein/Aus-Kontrast von mindestens 100 : 1 erreicht wird. Es ergibt sich somit der in Figur 4 skizzierte Signalverlauf.

Die vom Detektor kommenden Pulse sind "Dunkelpulse". Die aus ihnen auszuwertende Information sind die in Figur 4 markierten Zeitpunkte $t_1$ und $t_2$ für die (in Flugrichtung gesehen) erste Lichtschranke, sowie $t_3$ und $t_4$ für die zweite Lichtschranke. Zu diesen Zeitpunkten geht die Spannung $U_1(t)$ bzw. $U_2(t)$ durch den 50% Pegel ihres 'normalen' Wertes $U_D$, der während der relativ langen Pausen zwischen den Pulsen besteht. Bei der praktischen Auslegung der Schaltung ist zu beachten, dass die 'normalen' Spannungen $U_{D1}$ und $U_{D2}$ an den beiden Lichtschranken im allgemeinen etwas verschiedene Höhen haben.

Es ist deshalb zweckmäßig, die Spannungspegel $U_{D1}$ und $U_{D2}$ aus den betreffenden Detektorsignalen durch 'Spitzenwert-Gleichrichtung' zu gewinnen, welche die kurzzeitigen 'Einbrüche' (Dunkelpulse) der Spannungen $U_1(t)$ und $U_2(t)$ überbrückt, sich aber mit einer Zeitkonstante von z.B. 1 s an langsame Änderungen der Laserleistung anpasst.

Aus $U_{D1}$ und $U_{D2}$ werden in zwei Spannungsteilern die Spannungen 1/2 $U_{D1}$ und 1/2 $U_{D2}$ gewonnen, die als Referenz für zwei Trigger-ICs dienen. Diese werden so ausgelegt, dass sie normierte Ausgangssignale TR1 .... TR4 abgeben, wenn ihre Eingangsspannungen $u_1(t)$ und $u_2(t)$ von oben nach unten (TR 1 und TR3) bzw. von unten nach oben (TR2 und TR4) durch die jeweilige Referenzspannung gehen.

Die Triggersignale werden digitalen Eingängen eines digitalen Signalprozessors (DSP) zugeführt und veranlassen jeweils, dass die zentrale Uhr (z.B. 10 MHz-Takt) des DSP abgelesen und die momentane Zeit $t_i$ gespeichert wird. Wenn die letzte Ablesung ($t_4$) erfolgt ist, wird der Datensatz [$t_1$, $t_2$, $t_3$, $t_4$] sofort im DSP ausgewertet, um die mittlere Pulsdauer $\tau_P$ und die Flugzeit $\tau_F$ zu bestimmen:

$$\tau_P = (t_2 + t_4 - t_1 - t_3)/2 \qquad \tau_F = (t_3 + t_4 - t_1 - t_2)/2$$

Die Divisionen durch 2 brauchen nicht im DSP ausgeführt zu werden, sie können später bei der Auswertung im PC erfolgen. Sie sind hier dennoch angegeben, um mit verständlicheren Größen zu arbeiten. Die Berechnung von $\tau_P$ und $\tau_F$ erfordert im DSP somit nur Additionen und Subtraktionen ganzer Zahlen und kann sehr schnell, also online, durchgeführt werden.

Das Datenpaar {$\tau_P,\tau_F$} könnte dann sofort vom Prozessor an den PC übertragen werden. Es ist jedoch effizienter, eine gewisse Anzahl solcher Datenpaare zu sammeln, bevor sie übertragen werden, beispielsweise 1x pro Sekunde oder jeweils dann, wenn der DSP-interne Speicher gefüllt ist. Die Rate, mit der diese Datenpaare anfallen, hängt von dem zu messenden Massenstrom ab; sie sollte praktisch nicht größer sein als 3.000 Datenpaare/Sekunde, könnte in Grenzfällen aber Werte bis zu 10.000 Paare/Sekunde erreichen.

Es ist nicht zwingend notwendig, jedes Partikel, das die Trigger auslöst, mit seinen Daten {$\tau_P,\tau F$} zu erfassen und der Auswertung im PC zuzuführen. Es ist zulässig, während der Datenübertragung zum PC den Signalprozessor für die Registrierung weiterer Partikel zu sperren, und ihn erst nach der Übertragung wieder freizugeben. Dies gilt uneingeschränkt, wenn diese Unterbrechungszeiten nur einen kleinen Bruchteil (weniger als 1 %) der Gesamtzeit ausmachen. Da die jeweils statistisch ausgewerteten Partikelzahlen groß sind, wird die erreichte Messgenauigkeit durch solche gelegentlichen kurzen Unterbrechungen nicht wesentlich herabgesetzt. Wenn die 'Totzeit' des Sensors infolge der Übertragungen aber einen größeren Wert als etwa 1 % der gesamten Messzeit erreicht, so wird es notwendig, die Länge dieser Totzeiten zu protokollieren und sie bei der letztendlichen Berechnung des Massenstromes als Korrektur zu berücksichtigen.

Bei derartigen Operationen, aber auch im normalen Betrieb, kann es vorkommen, dass von einem Partikel nicht der vollständige Satz von vier Zeitablesungen [$t_1$, $t_2$, $t_3$, $t_4$] erfasst wird. Ferner kann es vorkommen, dass sich zwei Partikel gleichzeitig im Bereich der Lichtschranken befinden, und dass sich ihre Triggersignale zeitlich 'vermischen'. Dies muss vom Prozessor fortlaufend überprüft werden, und unvollständige Datensätze [$t_1$, $t_2$, $t_3$, $t_4$] dürfen nicht weiterverarbeitet werden. Zu diesem Zweck wird für jedes Partikel ein 'Partikel-Zeitfenster' definiert. Es beginnt, sobald ein Triggersignal TR1 auftritt, und läuft dann über eine fest vorgegebene (programmierbare) Zeitdauer $T_P$. Diese Zeit wird etwas länger gewählt als die längste vorkommende Zeit ($t_4$ - $t_1$), die von dem größten möglichen Partikel bei langsamster Fördergeschwindigkeit zum Durchlaufen des Sensors benötigt wird. Die Dauer dieses 'Partikel-Zeitfensters' liegt typisch bei $T_P$ = 150 - 500 µs. Während dieser Zeit dürfen vom Prozessor keine weiteren Triggersignale TR1 angenommen werden. Um die Vollständigkeit der vier benötigten Zeitablesungen zu überprüfen, könnten zu Beginn eines jeden Zeitfensters die drei Speicher für $t_2$, $t_3$, $t_4$ auf Null gesetzt werden. Beim Eintreffen der Triggerpulse TR2, TR3 und TR4 werden diese Nullen dann mit den abgelesenen Zeiten $t_2$, $t_3$ bzw. $t_4$ überschrieben. Dabei muss sichergestellt sein, dass in jeden der drei Speicher nur einmal geschrieben werden kann, um Konfusionen zu vermeiden, die evtl. durch ein nachfolgendes zweites Partikel auftreten könnten. Nach Ablauf des Zeitfensters $T_P$ wird geprüft, ob die drei Speicher für $t_2$, $t_3$, $t_4$ tatsächlich ungleich 0 sind. Falls ja, werden die Daten weiterverarbeitet; falls nein, wird der Datensatz verworfen, und gleichzeitig wird ein Zähler zur Registrierung dieser Vorgänge um eins erhöht. Erst nach Ablauf von $T_P$ werden alle Speicher wieder freigegeben, und beim Auftreten eines neuen Pulses TR1 kann ein neues Zeitfenster beginnen.

Es ist eine Konsequenz der Einführung dieses 'Partikel-Zeitfensters', dass das System während der Zeit $T_P$ 'tot' ist und kein neues Partikel registrieren kann, das evtl. kurz nach dem ersten eintrifft. Dadurch entgeht ein gewisser Bruchteil der Partikel der Messung. Eine Analyse dieser Situation zeigt, dass die Wahrscheinlichkeitsverteilung der zeitlichen Abstände aufeinanderfolgender Partikel durch eine Exponentialfunktion gegeben ist:

$$w(t) = \exp(-t/T_m)$$

Hierbei bedeutet $T_m$ die mittlere Zeit zwischen zwei Partikeln. Der Verlust der Signale von Partikeln, die während der Totzeit eintreffen, reduziert die Nachweiswahrscheinlichkeit des Systems von 100 % auf den Wert

$$D_w = \exp(-T_P/T_m)$$

Da das System die mittlere Zeit $T_m$ zwischen den Partikeln kennt, kann es diese reduzierte Nachweiswahrscheinlichkeit berechnen und sie bei der Ermittlung des Massenstromes als Korrekturfaktor berücksichtigen. Praktisch ist das Gesamtsystem aber so ausgelegt, dass diese Korrektur im allgemeinen klein (< 10 %) bleibt.

Dennoch ist es sinnvoll anzustreben, dass die Berechnung von $\tau_P$ und $\tau_F$, wenn möglich, außerhalb des Zeitfensters erfolgt, um möglichst wenig Messzeit zu verlieren. Dies ist praktisch realisierbar, weil der DSP während des Zeitfensters relativ wenig zu tun hat (nur die Abspeicherung der drei Zeiten), so dass die Berechnung von $\tau_p$ und $\tau_F$ eines Datensatzes jeweils zu Beginn des folgenden Datensatzes durchgeführt werden kann.

Aus dem gleichen Grund ist es sinnvoll, die Länge des Zeitfensters 'dynamisch' festzulegen, angepasst an die vorliegende Fördergeschwindigkeit. Ein anderer Schritt in dieselbe Richtung ist es schließlich, auch das Zeitfenster aufzuspalten in zwei solche Fenster, jeweils eines für jede der beiden Lichtschranken, und diese Fenster um die Flugzeit $\tau_F$ zeitlich gegeneinander zu versetzen. Auf diese Weise kann die insgesamt auftretende Totzeit etwa halbiert werden im Vergleich mit der oben beschriebenen Situation mit einem einzigen, festen, alle vier Zeitpunkte $t_1$ - $t_4$ umfassenden Zeitfenster.

Wenn ein Partikel den Strahl einer Lichtschranke nur 'streift', ist der erzeugte Dunkelpuls nicht voll ausgebildet, sondern nur partiell. Falls im Minimum des Pulses das Signal $u_1(t)$ ganz oberhalb der Triggerschwelle $1/2\ U_{D1}$ bleibt, wird das betreffende Partikel einfach ignoriert. Entsprechendes gilt für die andere Lichtschranke. Ungünstiger ist der Fall, wo zwar die Triggerschwelle $1/2\ U_{D1}$ unterschritten und ein Triggersignal TR1 ausgelöst wird, das Signal aber nur wenig unter die Schwelle reicht. Dann würde das betreffende Partikel mit einer zu kurzen Pulsdauer registriert werden, die nicht seiner wahren Größe entspricht.

Um die hierdurch bedingten Fehler zu reduzieren, können die Auswertung und Weitergabe des Datensatzes $[t_1, t_2, t_3, t_4]$ davon abhängig gemacht werden, dass $u_1(t)$ eine zweite Triggerschwelle unterschreiten muss, die z.B. bei $0,1\ U_{D1}$ eingerichtet wird. Entsprechend müsste auch das Signal $u_2(t)$ der zweiten Lichtschranke auf totale Abdunklung überprüft werden. Praktisch wird dieser Fehler in Folge nur partieller Abdunklung bei der Massenstrom-Messung nicht bedeutsam sein, solange das Partikelgrößen-Spektrum konstant ist. Je nach Art dieses Spektrums wird nämlich stets ein bestimmter, fester Bruchteil der Partikel aufgrund dieser nur partiell ausgeprägten Lichtschranken-Signale der Erfassung entgehen. Wenn das System durch Vergleich mit einer genauen offline Methode (z.B. Wägung) kalibriert wird, so ist dieser Bruchteil bereits in der Kalibrierungskonstante berücksichtigt. Nur wenn sich das Spektrum und damit der erwähnte Bruchteil ändern, würde die Kalibrierung nicht mehr zutreffen und es entstünde ein Fehler in der Massenstrom-Anzeige.

Für die Gewinnung sauberer Triggersignale ist es zweckmäßig, die Verstärkung der Vorverstärker so zu regeln, daß die Spannungen $U_D$ einen näherungsweise konstanten Wert haben. Wenn im Laufe des Betriebes die Transmission der Fenster abnimmt, etwa weil sich Staub aus dem Produktstrom auf den Fenstern absetzt, wird diese Regelung immer weiter 'beansprucht'. Je geringer die Fenster-Transmission wird, desto höher wird die Verstärkung. Hier sollte eine Schwelle vorgesehen werden, die bei etwa 70% (-3 dB) vom Normalwert (saubere Fenster) liegt. Wird die Schwelle überschritten, gibt der DSP einen Alarm an den PC abgeben: "Fenster reinigen!" 'Auf diese Weise wird eine Selbstüberwachung des Transmissionszustandes der Fenster erreicht.

Das Funktionsprinzip des Sensors erfordert es, dass die Laserstrahlen der beiden Lichtschranken in der Flugrichtung möglichst dünn sind, damit die Partikelgröße mit guter Genauigkeit gemessen werden kann. Dies ist durch Verwendung eines sorgfältig fokussierten Gaußschen Strahles möglich.

In der dazu senkrechten Richtung, also quer zur Flugrichtung der Partikel, besteht zunächst keine derartige Einschränkung für die Breite $2w_{o,q}$ der Laserstrahlen. Auch hier ist es aber angebracht, den Strahl möglichst 'dünn' zu machen: Ein breiterer Strahl hätte nämlich den Nachteil, dass Partikel, deren Durchmesser kleiner ist als die Breite des Strahles, diesen nicht mehr vollständig unterbrechen, sondern ihn nur partiell blockieren können. Sie würden dann aufgrund der im vorigen Abschnitt beschriebenen zweiten Triggerschwelle ganz aus der Messung herausfallen.

Von einem formal-mathematischen Standpunkt aus lassen sich die beiden oben beschriebenen Verfahren zur Berechnung des Massenstromes $\mu$ aus den gemessenen Unterbrechungszeiten $\tau_i$ der Lichtschranke auffassen als Sonderfälle einer allgemeineren Reihe möglicher Berechnungsverfahren, bei denen die sogenannten 'Momente' der gemessenen Unterbrechungszeiten $\tau_i$ gebildet und zur Berechnung des Massenstromes verwendet werden. Für eine feste, vorgegebene Größenverteilung der Partikel kann nämlich im Prinzip jeder der mit q = 0,1,2,3 ... gebildeten Zeitmittelwerte

$$\tau_{[q]} = \left[\frac{1}{N}\ \Sigma \tau_i^{\ q}\right]^{1/q}$$

benutzt werden, um den Massenstrom zu charakterisieren, sofern dabei nur jeweils ein passender Kalibrierungsfaktor $\Gamma_q$ verwendet wird. Hier bedeutet N die Anzahl der während der Messzeit $T_0$ erfassten Partikel, so dass $Z = N/T_0 = 1/T_m$ die mittlere Zählrate ist. Der Mittelwert $\tau_{[q]}$ wird gebildet, indem über die zur q-ten Potenz erhobenen Unterbrechungszeiten gemittelt wird. Bei Berücksichtigung der Totzeit $T_p$ gilt also für jedes q

$$\mu_q = \Gamma_q \, Zv^2 \tau_{[q]}^2 \exp(ZT_p)$$

Es ist ersichtlich, dass die nach den oben beschriebenen Verfahren resultierenden Ausdrücke $\mu_1$ und $\mu_2$ Spezialfälle (für q = 1 und q = 2) dieser allgemeineren Darstellung sind. Deshalb ist es praktisch von Interesse, für die Massenstrom-Auswertung mehrere Varianten des hier zuletzt formulierten Berechnungsverfahrens mit den drei Parameterwerten q = 1, 2, 3 zu verwenden.

Bei einer Änderung des Spektrums der Partikelgrößen $a_i$ werden sich dann die für verschiedene q berechneten Werte des Massenstromes $\mu$ unterscheiden. Es bleibt der praktischen und ausführlicheren Erprobung dieses Sensors vorbehalten, den optimalen Index q festzustellen.

In der bisher gegebenen Beschreibung war vorausgesetzt worden, dass alle Partikel dieselbe Dichte p, dieselbe Geschwindigkeit v und dasselbe Formenspektrum haben. Lässt man diese Voraussetzungen fallen und bestimmt für jedes Partikel einzeln seine Geschwindigkeit $v_i$, so lassen sich die Partikel nach ihren Dichten $p_i$ und ihren Formen unterscheiden. Mit einer solchen aufwendigeren Auswertungstechnik kann die erfindungsgemäße Feinstrahl-Lichtschranke auch benutzt werden, um den aus der Cigarettenmaschine kommenden Partikelstrom zu klassieren.

Der bei der Cigarettenherstellung anfallende Winnowings-Strom setzt sich in der Regel aus zwei Komponenten zusammen, nämlich Rippen-Partikel und Blatt- bzw. Lamina-Partikel. Diese beiden Komponenten unterscheiden sich sowohl in der Dichte als auch in der Form, wobei die Dichte der Lamina-Partikel etwas höher als die Dichte der Rippen ist und Lamina-Partikel komplexe Formen haben, während die Rippen-Partikel einfache, gerade Formen haben.

Aufgrund dieser Unterschiede in den angesprochenen physikalischen Eigenschaften bewegen sich Rippen-Partikel einerseits und Lamina-Partikel andererseits auch mit unterschiedlicher Geschwindigkeit relativ zur Trägerströmung der pneumatischen Tabakförderung.

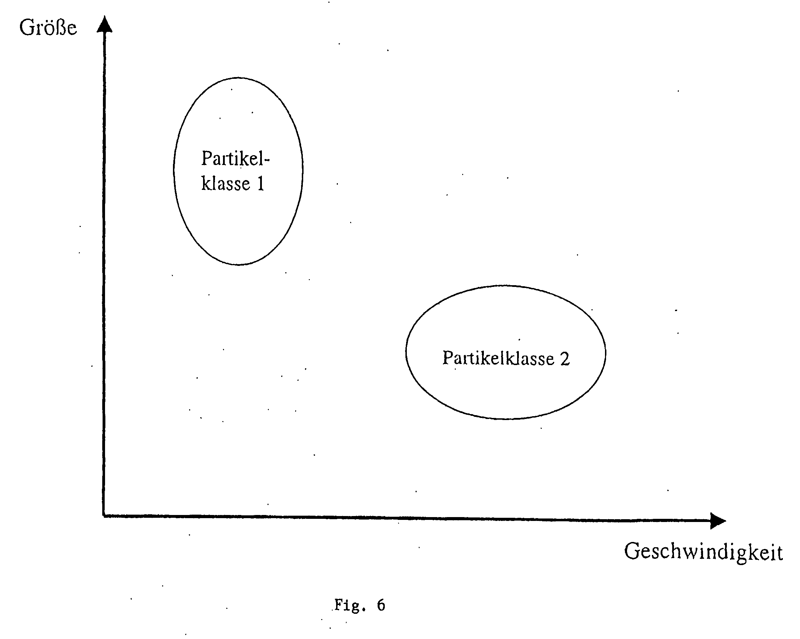

Da durch die Feinstrahl-Lichtschranke mit zwei Lichtstrahlen sowohl die individuelle Partikelgröße als auch die Geschwindigkeit der Partikel bestimmt werden kann, lassen sich diese beiden Messwerte in dem Diagram nach Figur 6 aufzeichnen, bei dem die Größe der Partikel über ihrer Geschwindigkeit aufgetragen wird.

Wie man erkennt, sind bei dieser Darstellung die Messwerte in zwei Bereichen konzentriert, die man zwei verschiedenen Partikel-Klassen zuordnen kann, nämlich den Rippen als Partikelklasse 1 einerseits und den Lamina-Partikeln als Partikelklasse 2 andererseits.

Die im DSP abgelegten Messwerte werden auf Intervalle beschränkt, die den auftretenden Partikelklassen zugeordnet sind. Wählt man die Massenströme nur innerhalb der Intervalle der einzelnen Partikelklassen aus, so können die Massenströme auch für die einzelnen Partikelklassen, nämlich Lamina-Partikel und Rippen-Partikel, getrennt bestimmt werden.

Die Lagen der einzelnen Partikelklassen in dem Größe/Geschwindigkeit-Diagramm können entweder durch Berechnung unter Benutzung der bekannten strömungsmechanischen Gleichungen oder durch eine messtechnische Kalibrierung ermittelt werden, indem Proben der einzelnen, vorkommenden Partikelklassen, insbesondere Lamina-Partikel und Rippen, durch die Messstrecke gefördert und vermessen werden. Die Bereiche, in denen sich für die einzelnen Partikelklassen die gehäuften Messwerte ergeben, werden dann den entsprechenden Partikelklassen zugeordnet.

Auf diese Weise kann die erfindungsgemäße Feinstrahl-Lichtschranke auch als "Rippen-Sensor" bzw. als "Lamina-Sensor" eingesetzt werden, so dass unter Verwendung einer geeigneten Rückkopplungsschleife in den Cigarettenherstellungsprozess eingegriffen werden kann, um beispielsweise den Anteil von Lamina-Teilchen in dem Winnowing-Massenstrom zu verringern.

Es hat sich als zweckmäßig herausgestellt, wenn der Darstellung in dem Größe/Geschwindigkeits-Diagramm nicht die aktuellen Geschwindigkeiten, sondern die Relativgeschwindigkeit in Bezug auf die Geschwindigkeit des Fördermediums für den Tabakpartikel-Strom, also die sogenannte Schlupfgeschwindigkeit $v_S$ gemäß der Gleichung

$$v_S = v_f - v$$

zugrundegelegt wird. Dabei bedeutet $v_f$ die Geschwindigkeit des fluiden Transportmediums für den Tabakpartikel-Strom, und v die von den beiden Feinstrahl-Lichtschranken ermittelte Geschwindigkeit der Tabakpartikel.

Die Geschwindigkeit $v_f$ des fluiden Transportmediums wird entweder durch eine separate Messvorrichtung, beispielsweise durch ein Anemometer, oder anhand der auftretenden Maximal-Geschwindigkeiten v ermittelt, die den Geschwindigkeiten v der kleinsten, gerade noch nachweisbaren Tabakpartikel entsprechen, deren Schlupf sehr gering ist und die deshalb in guter Näherung ein Mass für die Geschwindigkeit $v_f$ des Fördermediums darstellen.

**Patentansprüche**

1. Verfahren zur Erfassung der Partikel eines Tabakpartikel-Stroms bei der Herstellung von rauchbaren Artikeln mit den folgenden Merkmalen:

a) der Tabakpartikel-Strom wird mittels einer Feinstrahl-Lichtschranke mit einem Strahl-Durchmesser ($D_S$) abgetastet

b) der kleiner ist als die Abmessungen der Tabakpartikel; und

c) aus der Verteilung der durch Abdunkeln der Feinstrahl-Lichtschranke ermittelten Abmessungen ($a_i$) der Tabakpartikel werden eine mittlere Abmessung (a) und ein mittleres Volumen (V) der Tabakpartikel ermittelt.

2. Verfahren nach Anspruch 1, **dadurch gekennzeichnet, dass** aus der Zeitdauer eines einzelnen Signals der Feinstrahl-Lichtschranke die Größe der Tabakpartikel berechnet wird.

3. Verfahren nach Anspruch 1 oder 2, **dadurch gekennzeichnet, dass** die mittlere Abmessung der Partikel ($a_{[q]}$) durch Auswertung des q-ten Momentes der Abdunklungszeiten

$$\tau_{[q]} = (N^{-1}\Sigma\tau^q_i)^{1/q}$$

berechnet werden, wobei N die Anzahl der während einer vorgegebenen Messzeit erfassten Partikel, q eine kleine ganze Zahl und v die Partikelgeschwindigkeit ist: $a_{[q]} = v\tau_{[q]}$.

4. Verfahren nach einem der Ansprüche 1 bis 3, **dadurch gekennzeichnet, dass** aus der mittleren Größe der Tabakpartikel ($a_{[q]}$) und ihrer Geschwindigkeit (v) der Massenstrom ($\mu$) des Tabakpartikel-Stroms berechnet wird.

5. Verfahren nach einem der Ansprüche 1 bis 4, **dadurch gekennzeichnet, dass** die für verschiedene Werte des Parameters q berechneten mittleren Größen ($a_{[q]}$) der Tabakpartikel laufend miteinander verglichen werden, um aus plötzlichen Änderungen ihrer Verhältnisse Veränderungen in der Größenverteilung der Partikel festzustellen.

6. Verfahren nach einem der Ansprüche 1 bis 5, **dadurch gekennzeichnet, dass** der Strahl-Durchmesser ($D_S$) der Feinstrahl-Lichtschranke im Bereich zwischen 0,01 und 0,2 mm, insbesondere zwischen 0,05 und 0,15 mm liegt, und/oder dass der Detektor ($D_1$, $D_2$) der Feinstrahl-Lichtschranke hinreichend schnell anspricht, nämlich mit Zeitkonstanten kleiner 100 ns.

7. Verfahren nach einem der Ansprüche 1 bis 6, **dadurch gekennzeichnet, dass** die Triggerspannung für das Ansprechen der Lichtschranke durch Spitzenwert-Gleichrichtung und Spannungsteilung aus dem Lichtschrankensignal selbst gewonnen wird.

8. Verfahren nach einem der Ansprüche 1 bis 7, **dadurch gekennzeichnet, dass** die optische Transmission zwischen der Lichtquelle und dem Photodetektor in den Zeiten, wenn kein Partikel den Stahl unterbricht, überwacht wird, und dass bei Unterschreiten eines voreingestellten Wertes eine Alarmmeldung erzeugt wird.

9. Verfahren nach Anspruch 8, **dadurch gekennzeichnet, dass** die Verstärkung des Signals der Feinstrahl-Lichtschranke so geregelt wird, dass sich im langfristigen zeitlichen Mittel ein konstanter, vorgegebener Spannungswert einstellt, und dass das Spannungsregelsignal zur Erzeugung der Alarmmeldung verwendet wird.

10. Verfahren nach einem der Ansprüche 1 bis 9, **dadurch gekennzeichnet, dass** der Tabakpartikel-Strom durch ein Sensor-Rohr gefördert wird, das von der Feinstrahl-Lichschranke durchstrahlt wird.

11. Verfahren nach einem der Ansprüche 1 bis 10, **dadurch gekennzeichnet, dass** der Radius (R) des Sensor-Rohrs sehr viel größer als die Abmessungen der Tabakpartikel ist.

12. Verfahren nach einem der Ansprüche 1 bis 11, **dadurch gekennzeichnet, dass** zur Bestimmung der Geschwindigkeit (v) der Tabakpartikel eine zweite Feinstrahl-Lichtschranke in einem definierten Abstand ($b_{12}$) von der ersten Feinstrahl-Lichtschranke angeordnet ist, und dass aus der Flugzeit ($t_{12}$) zwischen den beiden Feinstrahl-Lichtschranken einerseits und ihrem bekannten Abstand ($b_{12}$) andererseits die Geschwindigkeit berechnet wird.

13. Verfahren nach Anspruch 12, **dadurch gekennzeichnet, dass** zur Bestimmung des Massenstroms ($\mu$) der Tabakpartikel die Ausgangssignale der Feinstrahl-Lichtschranken für alle Tabakpartikel ausgewertet werden, die während einer voreingestellten Messzeit ($T_0$) die Feinstrahl-Lichtschranke auslösen.

14. Verfahren nach einem der Ansprüche 12 oder 13, **dadurch gekennzeichnet, dass** die beiden Feinstrahl-Lichtschranken einen so kleinen Abstand voneinander haben, dass beide in sehr guter Näherung gleichartige Signale liefern.

15. Verfahren nach einem der Ansprüche 1 bis 14, **dadurch gekennzeichnet, dass** die mittlere Größe (a) der Tabakpartikel aus der mittleren Pulsdauer ($\tau$) der bzw. jeder Feinstrahl-Lichtschranke unter Berücksichtigung eines für das Formenspektrum der Tabakpartikel charakteristischen Formfaktor ($f_t$) ermittelt wird.

16. Verfahren nach einem der Ansprüche 1 bis 15, **dadurch gekennzeichnet, dass** für jedes erfasste Partikel ein "Partikel-Zeitfenster" definiert wird, in dem keine weiteren Partikel registriert werden.

17. Verfahren nach Anspruch 16, **dadurch gekennzeichnet, dass** die Totzeit des Sensors ($T_p$), die durch das Partikel-Zeitfenster verursacht wird, bei der Berechnung des Massenstromes ($\mu$) **dadurch** korrigierend berücksichtigt wird, dass der Massenstrom, der aus den außerhalb der Partikel-Zeitfenster erfassten Partikeln berechnet wird, mit dem Faktor $\exp(T_p/T_m)$ multipliziert wird, wobei $T_m$ der mittlere Zeitabstand der Partikel ist.

18. Verfahren nach einem der Ansprüche 1 bis 17, **dadurch gekennzeichnet, dass** in einem Kalibrierungs-Lauf die für die Auswertung erforderlichen Form-/KalibrierFaktoren ermittelt werden, die für die Auswertung der Messergebnisse benutzt werden.

19. Verfahren nach einem der vorhergehenden Ansprüche, **dadurch gekennzeichnet, dass** die Tabakpartikel Winnowings sind.

20. Verfahren nach einem der Ansprüche 12 bis 19, **dadurch gekennzeichnet, dass** durch Auswertung der gemessenen Geschwindigkeiten ($v_i$) jedes Partikels seine Schlupfgeschwindigkeit ($v_s$) gegenüber dem Fördermedium ermittelt wird, und dass daraus dann für die gemessene Partikelgröße ($a_i$) eine Zuordnung des Partikels zu einer die Dichte und Form charakterisierenden Partikelklasse vorgenommen wird.

21. Verfahren nach Anspruch 20, **dadurch gekennzeichnet, dass** durch Klassierung der Messwerte in einem Größen/Geschwindigkeits-Diagramm die einzelnen, in dem Tabakpartikel-Strom auftretenden Partikelklassen, insbesondere Lamina-Partikel und Rippen-Partikel, unterschieden werden.

22. Vorrichtung zur Erfassung der Partikel eines Tabakpartikel-Stroms bei der Herstellung von rauchbaren Artikeln mit den folgenden Merkmalen:

   a) einen Sensor, durch den der Tabakpartikel-Strom pneumatisch gefördert wird;
   b) eine in dem Sensor vorgesehene Feinstrahl-Lichtschranke mit einem Durchmesser, der kleiner als die Abmessungen der Tabakpartikel ist; und
   c) mit einer Auswerteinrichtung zur Ermittlung einer mittleren Abmessung und eines mittleren Volumens der Tabakpartikel aus den durch Abdunkeln der Feinstrahl-Lichtschranke ermittelten Abmessungen ($a_i$) der Tabakpartikel.

23. Vorrichtung nach Anspruch 22, **dadurch gekennzeichnet, dass** in einem definiertem Abstand ($b_{12}$) von der ersten Feinstrahl-Lichtschranke eine zweite Feinstrahl-Lichtschranke zur Bestimmung der Geschwindigkeit (v) der Tabakpartikel angeordnet ist.

24. Vorrichtung nach einem der Ansprüche 22 oder 23, **dadurch gekennzeichnet, dass** eine Anordnung zur Bestimmung der Geschwindigkeit des Fördermediums für den Tabakpartikel-Strom vorgesehen ist.

25. Vorrichtung nach Anspruch 24, **dadurch gekennzeichnet, dass** die Anordnung zur Bestimmung der Fördergeschwindigkeit des Tabakpartikel-Stroms ein Anemometer ist:

26. Vorrichtung nach Anspruch 24, **dadurch gekennzeichnet, dass** als Wert für die Geschwindigkeit des Fördermediums für den Tabakpartikel-Strom die dem kleinsten Tabakpartikel zugeordnete maximale Partikelgeschwindigkeit verwendet wird.

## Claims

1. A method for detecting/measuring the particles of a tobacco particle stream in the production of smokable articles, comprising the following features:

   a) scanning the tobacco particle stream by means of a fine-beam light barrier having a beam diameter ($D_S$)
   b) which is smaller than the dimensions of the tobacco particles; and
   c) determining an average dimension (a) and an average volume (V) of the tobacco particles from the distribution of the dimensions ($a_i$) of the tobacco particles determined by the darkening of the fine-beam light barrier.

2. The method as set forth in claim 1, **characterised in that** the size of the tobacco particles is computed from the time duration of an individual signal of the fine-beam light barrier.

3. The method as set forth in claim 1 or 2, **characterised in that** the average dimension of the particles ($a_{[q]}$) is computed by evaluating the $q^{th}$ moment of the dark times

$$\tau_{[q]} = \left(N^{-1} \sum \tau_i^q\right)^{1/q}$$

where $N$ is the number of particles detected during a predefined sensing time, q is a small whole number and v is the particle velocity:

$$a_{[q]} = v \tau_{[q]}.$$

4. The method as set forth in any one of claims 1 to 3, **characterised in that** the mass stream ($\mu$) of the tobacco particle stream is computed from the average size of the tobacco particles ($a_{[q]}$) and their velocity (v).

5. The method as set forth in any one of claims 1 to 4, **characterised in that** the average sizes ($a_{[q]}$) of the tobacco particles computed for various values of the parameter q are continuously compared with each other in order to establish changes in the size distribution of the particles from sudden changes in their ratios.

6. The method as set forth in any one of claims 1 to 5, **characterised in that** the beam diameter ($D_S$) of the fine-beam light barrier ranges between 0.01 and 0.2 mm, in particular between 0.05 and 0.15 mm, and/or **in that** the detector ($D_1$, $D_2$) of the fine-beam light barrier response sufficiently quickly, namely with time constants smaller than 100 ns.

7. The method as set forth in any one of claims 1 to 6, **characterised in that** the trigger voltage for the response of the light barrier is obtained by peak-type rectification and voltage dividing from the light barrier signal itself.

8. The method as set forth in any one of claims 1 to 7, **characterised in that** the optical transmission between the light source and the photo-detector is monitored at the times when the beam is not interrupted by particles, and **in that** an alarm signal is generated when a preset value is undercut.

9. The method as set forth in claim 8, **characterised in that** the gain of the signal of the fine-beam light barrier is regulated such that a constant predefined voltage value is obtained in a long-term time average, and **in that** the voltage regulator signal is used to generate the alarm signal.

10. The method as set forth in any one of claims 1 to 9, **characterised in that** the tobacco particle stream is transported through a sensor tube which is penetrated by the fine-beam light barrier.

11. The method as set forth in any one of claims 1 to 10, **characterised in that** the radius (R) of the sensor tube is significantly larger than the dimensions of the tobacco particles.

12. The method as set forth in any one of claims 1 to 11, **characterised in that**, in order to determine the velocity (v) of the tobacco particles, a second fine-beam light barrier is arranged at a defined distance ($b_{12}$) from the first fine-beam light barrier, and **in that** the velocity is computed from the flight time ($t_{12}$) between the two fine-beam light barriers on the one hand and their known distance ($b_{12}$) on the other.

13. The method as set forth in claim 12, **characterised in that**, in order to determine the mass stream ($\mu$) of the tobacco particles, the output signals of the fine-beam light barriers are evaluated for all tobacco particles triggering the fine-beam light barrier during a preset sensing time ($T_0$).

14. The method as set forth in any one of claims 12 or 13, **characterised in that** the two fine-beam light barriers have a sufficiently small distance from each other that both provide signals which are, in very good approximation, homogenous.

15. The method as set forth in any one of claims 1 to 14, **characterised in that** the average size (a) of the tobacco particles is determined from the average pulse duration ($\tau$) of the or of each fine-beam light barrier, taking into account a shape factor ($f_t$) which is characteristic of the shape spectrum of the tobacco particles.

16. The method as set forth in any one of claims 1 to 15, **characterised in that** a "particle time window", in which no further particles are registered, is defined for each detected particle.

17. The method as set forth in claim 16, **characterised in that** the dead time of the sensor ($T_p$), caused by the particle time window, is correctively taken into account when computing the mass stream ($\mu$), by multiplying the mass stream computed from the particles detected outside the particle time window by the factor $\exp(T_p/T_m)$, where $T_m$ is the average time interval of the particles.

18. The method as set forth in any one of claims 1 to 17, **characterised in that**, in a calibration run, the shape/calibration factors needed for evaluation are determined, which are used in evaluating the measurements results.

19. The method as set forth in any one of the preceding claims, **characterised in that** the tobacco particles are winnowings.

20. The method as set forth in any one of claims 12 to 19, **characterised in that** by evaluating the measured velocities ($v_i$) of each particle, its slip velocity

($v_s$) relative to the transport medium is determined, and **in that** from this, the particle is assigned to a particle class characterising the density and shape for the measured particle size ($a_i$).

21. The method as set forth in claim 20, **characterised in that** by classing the measured values in a size/velocity diagram, the individual particle classes occurring in the tobacco particle stream, in particular lamina particles and rib particles, are distinguished.

22. A device for detecting the particles of a tobacco particle stream in the production of smokable articles, comprising the following features:

   a) a sensor, through which the tobacco particle stream is pneumatically transported;
   b) a fine-beam light barrier, provided in the sensor and having a diameter which is smaller than the dimensions of the tobacco particles; and
   c) an evaluating device for determining an average dimension and an average volume of the tobacco particles from the dimensions ($a_i$) of the tobacco particles determined by the darkening of the fine-beam light barrier.

23. The device as set forth in claim 22, **characterised in that** a second fine-beam light barrier is arranged at a defined distance ($b_{12}$) from the first fine-beam light barrier, in order to determine the velocity (v) of the tobacco particles.

24. The device as set forth in any one of claims 22 or 23, **characterised in that** an arrangement for determining the velocity of the transport medium for the tobacco particle stream is provided.

25. The device as set forth in claim 24, **characterised in that** the arrangement for determining the transport velocity of the tobacco particle stream is an anemometer.

26. The device as set forth in claim 24, **characterised in that** the maximum particle velocity assigned to the smallest tobacco particle is used as the value for the velocity of the transport medium for the tobacco particle stream.

## Revendications

1. Procédé de détection des particules d'un écoulement de particules de tabac lors de la fabrication d'articles pour fumeurs, lequel procédé présente les caractéristiques suivantes :

   a) l'écoulement de particules de tabac est examiné au moyen d'une barrière lumineuse à faisceau fin, dont le diamètre ($D_s$)
   b) est plus petit que les dimensions des particules de tabac, et
   c) à partir de la répartition des dimensions ($a_i$) des particules de tabac déterminée par l'assombrissement de la barrière lumineuse à faisceau fin, on détermine une dimension moyenne (a) et un volume moyen (V) des particules de tabac.

2. Procédé selon la revendication 1, **caractérisé en ce que** la taille des particules de tabac est calculée à partir de la durée d'un signal individuel de la barrière lumineuse à faisceau fin.

3. Procédé selon les revendications 1 ou 2, **caractérisé en ce que** la dimension moyenne des particules ($a_{[q]}$) est calculée par évaluation du moment d'ordre q des durées d'assombrissement:

$$\tau_{[q]} = (N^{-1}\Sigma^q_i)^{1/q}$$

dans laquelle N représente le nombre des particules détectées pendant une durée de mesure prédéterminée, q un petit nombre entier et v la vitesse des particules :

$$a_{[q]} = v\tau_{[q]}.$$

4. Procédé selon l'une des revendications 1 à 3, **caractérisé en ce que** l'on calcule le débit massique ($\mu$) de l'écoulement de particules de tabac à partir de la taille moyenne des particules de tabac ($a_{[q]}$) et de leur vitesse (v).

5. Procédé selon l'une des revendications 1 à 4, **caractérisé en ce que** les tailles moyennes ($a_{[q]}$) des particules de tabac calculées pour différentes valeurs du paramètre q sont comparées en permanence les unes avec les autres pour constater des modifications de la répartition de la taille des particules à partir de modifications brusques de leurs rapports.

6. Procédé selon l'une des revendications 1 à 5, **caractérisé en ce que** le diamètre ($D_s$) du faisceau de la barrière lumineuse à faisceau fin est compris dans la plage de 0,01 à 0,2 mm et en particulier de 0,05 à 0,15 mm, et/ou **en ce que** le détecteur ($D_1$, $D_2$) de la barrière lumineuse à faisceau fin répond suffisamment rapidement, c'est-à-dire avec des constantes de temps inférieures à 100 ns.

7. Procédé selon l'une des revendications 1 à 6, **caractérisé en ce que** la tension de gâchette de l'excitation de la barrière lumineuse est obtenue à partir du signal proprement dit de la barrière lumineuse, par redressement de la valeur de pointe et division de la tension.

8. Procédé selon l'une des revendications 1 à 7, **caractérisé en ce que** la transmission de lumière entre la source de lumière et le photodétecteur pendant les périodes au cours desquelles aucune particule n'interrompt le faisceau est surveillée et **en ce que** lorsqu'une valeur préréglée n'est plus atteinte, un message d'alarme est créé.

9. Procédé selon la revendication 8, **caractérisé en ce que** l'amplification du signal de la barrière lumineuse à faisceau fin est régulée de telle sorte qu'une valeur prédéterminée de la tension s'établisse en moyenne à long terme et **en ce que** le signal de régulation de la tension est utilisé pour créer le message d'alarme.

10. Procédé selon l'une des revendications 1 à 9, **caractérisé en ce que** l'écoulement de particules de tabac est favorisé par un tube de détecteur qui est traversé par la barrière lumineuse à faisceau fin.

11. Procédé selon l'une des revendications 1 à 10, **caractérisé en ce que** le rayon (R) tu tube de détecteur est très largement supérieur aux dimensions des particules de tabac.

12. Procédé selon l'une des revendications 1 à 11, **caractérisé en ce que** pour déterminer la vitesse (v) des particules de tabac, on dispose une deuxième barrière lumineuse à faisceau fin à une distance ($b_{12}$) définie de la première barrière lumineuse à faisceau fin et **en ce que** la vitesse est calculée à partir d'une part du temps de parcours ($t_{12}$) entre les deux barrières lumineuses à faisceau fin et d'autre part de leur distance ($b_{12}$) connue.

13. Procédé selon la revendication 12, **caractérisé en ce que** pour déterminer l'écoulement massique ($\mu$) des particules de tabac, on évalue les signaux de sortie des barrières lumineuses à faisceau fin pour toutes les particules de tabac qui déclenchent la barrière lumineuse à faisceau fin pendant une durée de mesure ($T_0$) préréglée.

14. Procédé selon l'une des revendications 12 ou 13, **caractérisé en ce que** les deux barrières lumineuses à faisceau fin présentent l'une par rapport à l'autre une distance suffisamment petite pour délivrer des signaux identiques avec une très bonne approximation.

15. Procédé selon l'une des revendications 1 à 14, **caractérisé en ce que** la taille moyenne (a) des particules de tabac est déterminée à partir de la durée moyenne ($\tau$) des impulsions de la ou des barrières lumineuses à faisceau fin en tenant compte d'un facteur de forme ($f_t$) caractéristique du spectre de forme des particules de tabac.

16. Procédé selon l'une des revendications 1 à 15, **caractérisé en ce que** pour chaque particule détectée, on définit une "fenêtre temporelle de particule" au cours de laquelle aucune autre particule n'est enregistrée.

17. Procédé selon la revendication 16, **caractérisé en ce que** le temps mort du détecteur ($T_p$) qui est provoqué par la fenêtre temporelle de particule est pris en compte à titre de correction lors du calcul de l'écoulement massique ($\mu$) en multipliant l'écoulement massique calculé à partir des particules détectées en dehors des fenêtres temporelles de particule par le facteur $\exp(T_p/T_m)$ où $T_m$ représente l'écart temporel moyen entre les particules.

18. Procédé selon l'une des revendications 1 à 17, **caractérisé en ce que** les facteurs de forme et d'étalonnage nécessaires pour l'évaluation sont déterminés au cours d'une passe d'étalonnage et sont utilisés pour l'évaluation des résultats de mesure.

19. Procédé selon l'une des revendications précédentes, **caractérisé en ce que** les particules de tabac sont des résidus de vannage.

20. Procédé selon l'une des revendications 12 à 19, **caractérisé en ce que** par évaluation des vitesses ($v_i$) mesurées pour chaque particule, on détermine leur vitesse de dérive ($v_s$) par rapport au fluide de transport et **en ce que** pour la taille mesurée ($a_i$) des particules, on attribue les particules à une classe de particules qui caractérise leur densité et leur forme.

21. Procédé selon la revendication 20, **caractérisé en ce que** par classification des valeurs de mesure dans un diagramme taille/vitesse, on distingue les classes individuelles des particules présentes dans l'écoulement de particules de tabac et en particulier des particules de feuilles ("lamina") et des particules de nervures.

22. Dispositif de détection des particules d'un écoulement de particules de tabac en fabrication d'articles pour fumeurs, lequel dispositif présente les caractéristiques suivantes :

a) un détecteur dans lequel l'écoulement de particules de tabac est transporté pneumatiquement,
b) une barrière lumineuse à faisceau fin prévue dans le détecteur et dont le diamètre est plus petit que les dimensions des particules de tabac et

c) un dispositif d'évaluation qui détermine une dimension moyenne et un volume moyen des particules de tabac à partir des dimensions ($a_i$) des particules de tabac déterminées par l'assombrissement de la barrière lumineuse à faisceau fin.

23. Dispositif selon la revendication 22, **caractérisé en ce que** pour déterminer la vitesse (v) des particules de tabac, une deuxième barrière lumineuse à faisceau fin est disposée à une distance ($b_{12}$) définie de la première barrière lumineuse à faisceau fin.

24. Dispositif selon l'une des revendications 22 ou 23, **caractérisé en ce qu'**un agencement de détermination de la vitesse du fluide de transport de l'écoulement des particules de tabac est prévu.

25. Dispositif selon la revendication 24, **caractérisé en ce que** l'agencement de détermination de la vitesse du fluide de transport de l'écoulement des particules de tabac est un anémomètre.

26. Dispositif selon la revendication 24, **caractérisé en ce que** comme valeur de la vitesse du fluide de transport de l'écoulement des particules de tabac, on utilise la vitesse de particule maximale associée à la plus petite particule de tabac.

Fig. 1

Fig. 2

EP 1 091 203 B1

Fig. 3

Fig. 4

Fig. 5

EP 1 091 203 B1

Fig. 6